# EUROPEAN PATENT APPLICATION

(11) **EP 2 006 373 A1**
(43) Date of publication of application: **24.12.2008**
(21) Application number: 07301138.9
(22) Date of filing: 21.06.2007
(51) Int. Cl.: C12N 5/00, G01N 33/50

(54) **Separation method of biological objects relative to their viscoelastic properties**

(71) Applicant: Hera Diagnostics, 75005 Paris (FR); Canopus Bioscience Ltd, Toronto, ON M4N 2S8 (CA)
(72) Inventor: Raz, Ryan, Toronto, Ontario M4N 2S8 (CA); Presta, Anthony, Hamilton, Ontario L8K 6R8 (CA); Safar, Laurent, 75005 Paris (FR)
(74) Representative: Warcoin, Jacques

(57) **Abstract**

The present invention relates to a method for the separation of biological objects in a solution which have different viscoelastic properties, wherein said method comprises a filtration step allowing the higher viscoelastic biological objects to pass through the membrane while retaining the lower viscoelastic biological objects above the membrane, and a recovery step wherein the separated lower viscoelastic biological objects are recovered above or onto the membrane and/or the separated higher viscoelastic biological objects are recovered in the filtrate. Advantageously, the biological objects are cells. More advantageously, the recovered cells are viable cells. In one preferred embodiment, the cells are tumor cells. In another preferred embodiment, the cells are foetal cells and the method finds an application in prenatal diagnosis.

## Description

The present invention relates to a method for the separation of biological objects in a solution which have different viscoelastic properties, wherein said method comprises a filtration step allowing the higher viscoelastic biological objects to pass through the membrane while retaining the lower viscoelastic biological objects above the membrane, and a recovery step wherein the separated lower viscoelastic biological objects are recovered above or onto the membrane and/or the separated higher viscoelastic biological objects are recovered in the filtrate. Advantageously, the biological objects are cells. More advantageously, the recovered cells are viable cells. In one preferred embodiment, the cells are tumor cells. In another preferred embodiment, the cells are foetal cells and the method finds an application in prenatal diagnosis.

It is often desirable to examine biological samples, and specimens for signs of abnormality and disease.

As an example, the cells in a sample of blood or spinal fluid might need to be examined for indications of cancer. Because these types of samples might well contain millions of cells, it is very advantageous to separate the majority cells and fluids that are not of interest, thus concentrating the cells of interest.

In blood and spinal fluids it is desirable to remove plasma, erythrocytes red blood cells, and leukocytes (white blood cells), thus concentrating the small number of cells that are not normally present and that might exhibit signs of abnormality such as cancer. As leukocytes are often very similar to the cells of interest it is difficult to remove these cells without losses. The resulting concentrated cells of interest are then used for further analysis.

The methods currently available for separating cell types comprise separation by size, separation by centrifugation (density/specific gravity), and separation relative to the chemical or biochemical properties.

Separation by centrifugation works well when the two types of cells are very different as in the example of the separation of white and red blood cells. But centrifugation fails when the two types of cells have similar density and size, such as white blood cells and cancer cells. A further limitation of centrifugation-based cell separation is that the density of the cells are not constant, as even dead cells react to the conditions of their surrounding and environment.

Separation by (bio)chemical properties utilizing immuno-based chemistry by antibody binding of the cell to a surface antigen (which can possibly be attached to magnetic beads) is expensive, labor-intensive, and time-consuming. Many of the steps can have cell losses thus reducing the separation efficiency of this type of method. Also, cells will be lost if they don't have the matching antigen, and/or if the antigen is obscured by other blood components. Blood plasma proteins may coat the cells in circulation (a possible method of cancer cells evading the immune system) thus preventing their recognition by the antibody. The cells separated by this method are often in a form that is difficult for a visual examination of the results.

Separation by size is usually done by filtering through a filter, or an array of one or more hollow tubes with a specific hole size. Cells that are larger than the hole stay on one side of the filter while smaller cells go through the filter and are collected on the other side of the filter. In this separation method, a fixative agent is used for stabilizing the membrane of the cells, such as formaldehyde. However, cells are no more viable after the action of fixative agents, and cannot be cultured. Moreover, if the two types of cells have an overlapping size distribution (a certain portion of the cells of one type are larger while another portion are smaller than the other type of cell), then the filter does not separate the two types effectively, resulting in a loss of some of the cells of interest thus reducing separation efficiency. Moreover, filtering using a too high force can cause cells to rupture.

Consequently, separation by the above methods can damage the cells both biochemically, and mechanically, thus changing the cell morphology, and inhibiting subsequent processing and analysis.

There is thus a need for a method which allows the separation of different biological objects which may have the same size or an overlaping size distribution and which, advantageously, does not denature said biological objects such that, in the case of cells, the separated cells are viable and can be further cultured.

The Inventors have elaborated a new method of separation which meets the need in the art. According to this method, the biological objects are separated relative to their different biological properties, even if their size is the same or overlaps. Moreover, this method allows advantageously the recovered biological objects to be further used for culture applications.
Accordingly the present invention relates to a method to separate the objects by object type where the different object types can not be fully differentiated by size, shape, and density (leukocytes and certain cancer cells are two important examples). This method also provides a high separation efficiency, which allows the use of smaller sample sizes with less chance of missing objects of interest. Moreover, without any damage to the objects of interest, both biochemically, and morphologically, this method does not interfere with subsequent processing and analysis, and the correct morphology of the resulting objects is maintained. The separated objects can then be easily presented on a slide in a way that is preferred by a pathologist, or be read by automated vision system, or remain in a liquid solution for subsequent processing.

Thus, the subject-matter of the present invention is a method of separating multiple biological objects in a solution (at least two), wherein the different multiples biological objects are composed of at least a lower viscoelastic biological object type and a higher viscoelastic biological object type, and the lower viscoelastic biological objects have lower viscoelastic properties than the higher viscoelastic biological objects, comprising:
- a filtration step of the solution wherein the membrane is porous and the diameter of the pores is less than the diameter of the lower viscoelastic biological objects and also less than the diameter of a portion of the higher viscoelastic biological objects, and allowing the higher viscoelastic biological objects to pass through the membrane while retaining the lower viscoelastic biological objects on or above the membrane, and
- a recovery step wherein the separated lower viscoelastic biological objects are recovered above or onto the membrane and/or the separated higher viscoelastic biological objects are recovered in the filtrate.

The biological objects may be of any type, such as cells, bacteria, viruses, and yeasts, such list being not limiting. The biological objects in solution may be obtained from any biological sample. The biological sample may be bodily fluids, such as blood, spinal fluids, urine, any tissue and tumor biopsies. The method is not limited to a liquid biological sample. As an example a solid tissue biopsy can be preprocessed to break the tissue down into individual cells. The cells can then be suspended in a preservative fluid. It may also be water and soil samples, plant tissues and fluids,etc...

Advantageously, the multiple biological objects are at least two cell types.

The cells to be separated may be of any type. These can be cells naturally present in the blood such as megakaryocytes, monocytes, macrophages, dendritic cells, neutrophil granulocytes, eosinophil granulocytes, basophil granulocytes, mast cells, helper T cell, suppressor T cell, cytotoxic T cells, B cells, natural killer cells, reticulocytes, stem cells and committed progenitors for the blood and immune system. Cells to be separated can also belong to other origins. They can be epithelial cells (keratinizing epithelial cells, wet stratified barrier epithelial cells, exocrine secretory epithelial cells), cells from the gut, exocrine glands and urogenital tract, endothelial cells, metabolism and storage cells (hepatocyte, white fat cell, brown fat cell, liver lipocyte), barrier function cells (lung, gut, exocrine glands and urogenital tract), epithelial cells lining closed internal body cavities, extracellular matrix secretion cells, contractile cells, sensory transducer cells, autonomic neuron cells, sense organ and peripheral neuron supporting cells, central nervous system neurons and glial cells, lens cells, pigment cells, germ cells, nurse cells.

In a preferred embodiment, the cell types which are recovered are destined to be analyzed by biological, genetic and biochemical methods after further division and expansion in culture. Accordingly, the cells recovered are advantageously viable cells and the solutions used for the filtration step do not contain any reagent that kills the isolated cells.

In another embodiment, the cell types which are recovered are processed for further analysis by biological, genetic and biochemical methods, such as immunohistochemical, or genetic methods without further expansion in culture. Hence any reagent that might facilitate further processing may be added in the aqueous transport fluid during the filtration step (such as ethanol in the case of immunohistochemical analysis).

The cytoskeleton is a three-dimensional polymer scaffold which spans the cytoplasm of eukaryotic cells. This network is mainly composed of actin filaments, microtubules, intermediate filaments, and accessory proteins. It provides the cell structure and affects cell motility as well as viscoelastic properties. The viscoelastic properties of cells determine the degree of cell deformation as a result of mechanical forces and, consequently, affect cellular structure and function. The determination of the viscoelastic properties of living cells requires the quantification of force versus strain relationship of cells under physiological conditions. Several papers describe the techniques which can be used to determine the viscoelastic properties, and are well known by the man skilled in the art.

Numerous systems have been described in order to measure the rheological/viscoelastic properties of cells, including micropipette aspiration (Evans E. and Yeung A.,Biophys. J. (1989), 56, 151-160.), passage through the micro holes of a membrane (Frank R.S., Tsai M.A. J Biomech Eng. (1990); 112, 277-82), optical tweezers (Ashkin A. and Dziedzic J.M., Proc. Natl. Acad. Sci. USA (1989), 86, 7914-7918), Atomic Force Microscopy [Benoit M. et al., Nature Cell Biol.(2000), 2, 313-317). These techniques can be coupled to an adequate rheological model.

Micropipette aspiration technique is a frequently used method to measure viscoelastic properties of cells. This technique has the advantage to measure viscoelastic properties in solution and in the physiological environment of the cells. As an example, viscoelastic of both hepatocytes and hepatocellular carcinoma (HCC) cells were measured by means of a micropipette aspiration technique (Wu ZZ and al., Biorheology, 2000, 37, 279-290).

According to the present invention, during the first step of the process, cells are sorted according to their viscoelastic properties by a filtering step across a membrane containing holes with an appropriate size. Preferably, a controlled force is applied during the filtration step, which is kept lower than the predetermined force needed to force the lower viscoelastic biological object to pass through the membrane, and which is higher than or equal to the predetermined force needed to force the higher viscoelastic biological object to pass through the holes.

The expression "differential pressure" is used in the present invention to designate the pressure applied during the filtration step to force the higher viscoelastic biological objects to pass through the membrane while retaining the lower viscoelastic biological objects.
The expression "controlled force" designates the force directly resulting from this pressure with force = (differential pressure) x cell surface.

In the present invention, isolation of circulating cells of interest starting from a peripheral blood sample, is based on the difference in viscoelastic properties between leukocytes cells and the circulating cells of interest. In a particular embodiment, the lower viscoelastic cells are tumor cells or foetal cells.

The membranes used in the present invention display hydrophobic properties and are mostly inert and strong, resulting in a constant pore size even when under pressure.

The membranes used in the present invention are, for example, polycarbonate membranes. Polycarbonate membranes, have the properties described above and a highly efficient cell transfer rate of isolated cells from the membrane to the glass slide used for its biological characterization.

In a particular embodiment, the lower viscoelastic cells are tumor cells. Preferably, the controlled force which is applied during the filtration step is comprised between 20 kPascals and 190 kPascals, advantageously between 45 kPascals and 55 kPascals, and the average diameter of the pores is comprised between 3 µm and 15 µm, advantageously between 6 and 9 µm, thus allowing to recover the tumor cells on or above the membrane.

Indeed, normal and cancerous circulating cells display different viscoelastic properties. Scientific literatures indicate that the most of leukocytes cell types have folded membranes. The unfolding of the membrane gives leukocytes viscoelastic properties that allow the cell when under pressure to elongate and to pass through a micropipet tip without damage even when the tip is less than ¼ the diameter of the leukocyte (E Evans and A Yeung, (1989). Biophysical Journal 56: 151-160). Neutrophils, whose diameter size is comprised between 10 and 12 µm, can be made to pass through 3 µm holes.

Other types of cells lack this folded membrane and therefore have difficulty passing through a hole of less than the diameter of the cell. The smaller the membrane pore size in relation to the leukocyte size the greater the differential pressure is needed to force the leukocyte through the hole. As the morphology of cell progresses from normal to cancer cell the membrane changes in some cases getting thicker and in other cases getting thinner (Gang Zhang et al., 2002, World J Gastroenterol;8(2), 243-246). When the cell membrane gets thinner it is more susceptible to damage and lyses. The damage threshold for the cells of interest puts an upper limit on the pressure differential which can be applied across the membrane without damaging the cells of interest. It thus seems that malignant transformation induces a decrease in viscoelastic properties.

The method of this patent is an effective method to separate cell types and relies on the difference in viscoelastic properties between different cells.

As an example, in the case of separation of circulating cells according to their viscoelastic properties, a polycarbonate membrane with conservative 8 µm pore size applying a differential pressure of 45 to 55 kPascals (In Custom cut from sheets 8 µm Whatman polycarbonate Nuclopore membranes) can be used. Because of their viscoelasticity, this will suffice to pass the majority of leukocytes although the size of 75% of those cells is larger than 8 µm. On the other hand other cells larger than 8 µm in diameter will be blocked.

For separating leukocytes from other types of cells that are smaller than 8 µm in diameter, a membrane as small as 4 µm can be used with the corresponding need for higher pressures only being limited by the damage threshold for the cell or by forcing the cell types of interest through the membrane. Polycarbonate membranes are used because they are hydrophilic, mostly inert, and strong with low elasticity resulting in the pore size remaining constant even when under pressure. Also polycarbonate membranes have a highly efficient cell transfer rate from the membrane to a glass slide.

Preferably, the solution containing the cell types is a mononuclear cell fraction which results from a centrifugation step of a blood sample. In a particular embodiment, the lower viscoelastic cells are circulating tumor cells.
In another embodiment, the at least one of the cell types is a foetal cell type. Preferably, the foetal cells are foetal cells circulating in maternal blood.

A second aspect of the invention is an *in vitro* prenatal diagnosis comprising the method according to present invention wherein the at least one of the two cell types is a foetal cell type, as described above.

While the above description contains many specificities, these should not be construed as limitations on the scope of the invention, but as exemplifications of the presently preferred embodiments thereof. Many other ramifications and variations are possible within the teachings of the invention.

### LEGEND OF THE FIGURES

Figure 1a, 1b, 1c, 1d: Closely related conceptual drawings of a cell being forced through a smaller hole by the pressure differential.

Figure 2a is a schematic representation of two cell populations with overlapping size distribution. Cell population A has a larger mean size than cell population B. On the other hand, cell population A have higher viscoelastic properties than cell population B.

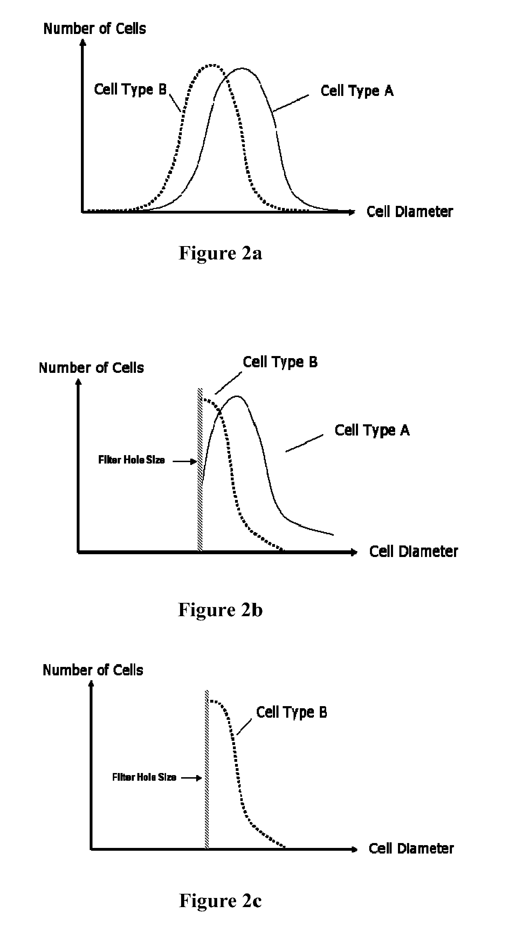

In the case of Figure 2b the mixture of cell population A + cell population B has been processed by classical separation by conventional size filtration onto a membrane. The scheme indicates the distribution of cells remaining above or onto the membrane. Cells with sizes smaller than the filter pore hole size will remain above or onto the membrane. Note the large amount of overlap between the two remaining populations after filtration. With a smaller hole size, a larger amount of type A cells remain with the type B cells, thus reducing the concentration of the cells of interest (cell type B). Conversely with a larger hole size, more type B cells (the cells of interest) are lost, reducing overall sensitivity to type B cells. Also, the position and shape of the distribution curves will vary from patient to patient. It is because of this overlap and variation in distribution that conventional filtering by size does poorly on the separation of the two cell types.

In the case of Figure 2c the mixture of cell population A + cell population B has been processed using the principle of the present invention using a controlled pressure differential to improve recovery and enrichment.

Cells of type A even when they are larger then the hole (pore) size of the membrane will pass through because of their higher viscoelastic properties as compared to type B cells. Type B cells will not get through the holes membrane unless the cell size is less than or close to the pore size of the membrane.

Figure 2c represents the distribution of cells remaining above or onto the membrane using the principle of the present invention.

Note the high efficiency of separation in Figure 2c as compared to Figure 2b.

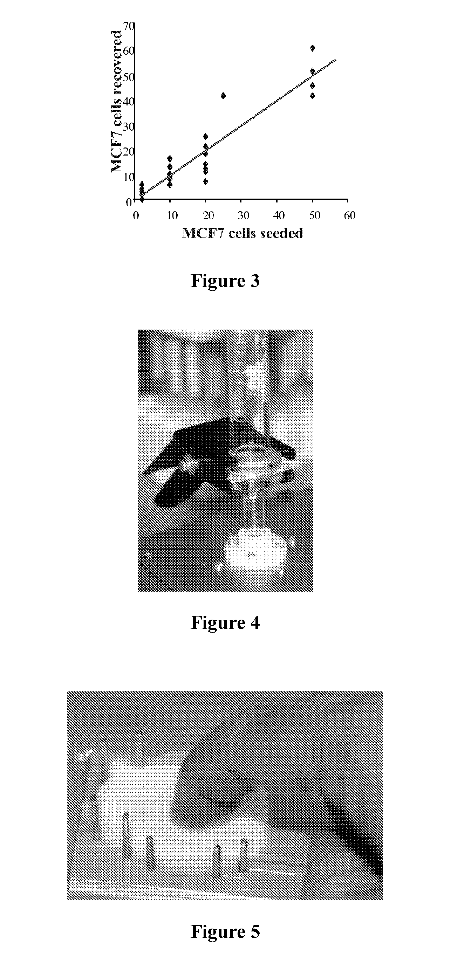

Figure 3: MCF7 cells recovered using the present method from blinded samples seeded with MCF7 cells.
Figure 4: Filtration device (see Examples- step 6.e) of Appendix A)
Figure 5: Recovery of the cells from the membrane (see Examples-step 10 of Appendix A)

### Detailed description of the figures

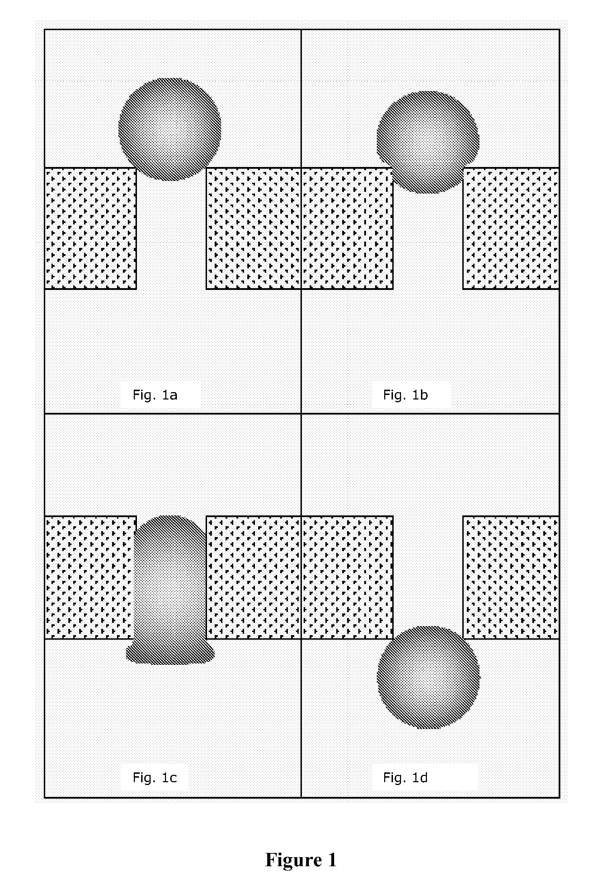

Figure 1a, 1b, 1c, 1d are conceptual drawings of a cell being forced through a smaller hole by the pressure differential.
a) Cell is attracted to empty hole by fluid flow through the hole. (higher pressure on the top) Fig. 1a
b) Pressure differential starts to deform and fold cell pushing it into the hole. Fig. 1b
c) Cell is pushed through the hole by pressure differential Fig 1c
d) Cell is expelled away from the hole by fluid flow through the hole Fig. 1d

The force (pressure differential) needed to push the cell through the smaller hole is dependent on size and the viscoelastic properties of the cell. Viscoelastic properties of an object are the properties that allow the object to elastically fold, and to bend, and to distort their shape, and to flow through holes and passageways that are smaller than the object. Literature indicates that the white blood cells (leukocytes) have relatively high viscoelastic properties; this allows them to flow through small diameter passageways and reach tissues via the body's microscopic blood vessels.

Tumor cells and fetal cells from the maternal blood can be of a similar size to that of white blood cells. But tumor cells and fetal cells are found to have considerably lower viscoelastic properties. Hence a tumor cell or a fetal cell needs considerably more force to push it through a small diameter hole as compared to a white blood cell of a similar size. The tumor or fetal cells will be stopped by the small hole size and will not go past the point in Figure 1a. Exploiting this difference in the viscoelastic properties of the two cell types enables the cells to be separated by type. Sorting cells by utilizing this property is a unique method and the basis of this invention.

### EXAMPLES

The protocols outlined below describe the method to isolate cancer cells from human blood samples. The samples are either taken from cancer patients, with the objective of isolating endogenous patient circulating tumor cells. Alternatively, as an experimental model for the validation of the present invention, cultured tumor cells are seeded into blood samples from healthy volunteers. In this latter setting the objective is to assess the yield and sensitivity of the isolation procedure.
A similar protocol can be used for the purification of fetal cells from maternal blood.

### 1. Equipment & Reagents

- Cultured carcinoma cells
- Becton-Dickinson Vacutainer tube (4 mL) with purple top (EDTA anti-coagulant)
- Phlebotomy personnel for the safe collection of blood from human subjects
- Ethanol (40% and 60%) in wash bottles
- Clean Glass microscope slides non-coated or coated (recommendded fresh Erie Scientific *Superfrost Plus slides,* follow manufacture's guidelines for storage of open boxes of slides)
- Ficoll-Paque differential centrifugation medium (Amersham Bioscience #17-1440-02) brought to room temperature.
- Centrifuge tubes capable of holding > 12 mL (recommend the 15-mL Falcon conical bottom tubes), and
- Swinging-bucket centrifuge capable of reaching speed specified for use of Ficoll-Paque product used for separation of mononuclear cell fraction from peripheral blood.
- Fine curved non-serrated tip tweezers for handling membranes.
- 5mL syringes x 2 slip tip without tips (BD - ref 301603)
   The following items need frequent washing (for large processing runs it is recommended that more are purchased). Includes 2 each of:
   Manufacturer Kimble - Kontes
      953701-0000 Glass Funnel top, 25 mm, 15 mL
      953702-0001 Fritted Glass Support Base (it is anticipated that in future versions of device the glassware will be replaced by disposable)
- consumable kit #1 containing:
   Membrane (Custom cut from sheets 8 µm Whatman polycarbonate Nuclopore filters); Sponge (Custom cut from sheets of hydrophilic polyurethane foam rubber produced by Lendell manufacturing) ; 10 cm silicon-tubing syringe tip; 12 cm silicon-tubing syringe tip (The length of the tip depends on the shape and length of the centrifuge tubes being used. Other materials such as hard plastics and stainless steel could also be used for the tip).
- Sample fixative (>95% ethanol recommended)
- Immunostaining reagents and equipment
- In another version of the invention, the glassware can be replaced by disposable single-use plastic ware. The washing steps are then avoided.

### 2. Seeding Method

Cultured cancer cells (preferably a cell line that is not overly prone to clumping) are harvested according to usual cell biology procedures, e.g. cell containers are washed, detached by trypsinization for a suitable length of time, then collected by centrifugation.
The collected cells are resuspended and washed in a 90% culture medium/10% serum solution (solution A), then centrifuged again for collection.
The cell density (cells/volume) is determined for the stock using a hemocytometer, taking a known volume from the well-dispersed stock.
A 4-mL whole blood sample is collected from the peripheral circulation of a healthy volunteer. The blood is collected in a commercial *Vacutainer®* with EDTA as the anticoagulant.

Cultured cancer cells are then added to the blood sample at a known nominal value by serial dilution of the dispersed stock. Solution A is used as the diluant throughout the series.
At every step in the series, and in the final seeded blood sample, the tube is gently mixed for cell dispersal.

The nominal value represents the approximate number of cells seeded into the sample; the exact desired number of cells cannot be achieved using the serial dilution method because of heterogeneity of the cell mixture. For exact seeding values (especially at low cell numbers), methods such as micromanipulation or flow cytometry are recommended.

### 3. Enrichment Method

- The blood is transferred from the collection tube to a suitable centrifuge tube.
- Slowly inject into the bottom the centrifugation tube 3.0 mL of Ficoll-Paque gradient centrifugation media at room temperature using the 5 mL syringe with the 12 cm tip.
- The blood samples are centrifuged at a speed of 400 g for 30 minutes, using a partial or no brake at the end of the run. Batch size should be determined by the total batch processing time of 30 minutes excluding centrifugation time. It is estimated the maximum size of a batch should be from 4 to 6 samples.
- The mononuclear cell fraction (or buffy coat) is aspirated from the centrifuge tube by immersing the tip of a 5-mL syringe fit with the 10 cm silicon-tubing tip attachment below the level of the buffy coat. Aspirate in a steady manner until a small amount of serum is aspirated. The tip should be lowered slightly and aspiration should continue until once again a small amount of serum is aspirated.
- The aspirated buffy coat is added directly onto the membrane, pre-primed with 40% ethanol, and with about 10 mL of 40% ethanol remaining in the top chamber of the apparatus. Flush the syringe out by aspirating some of the fluid back into the syringe and back out again.
- Filter the contents down to approximately 3 mL remaining in the top chamber. Wash the sample by addition of 10 mL of 40% ethanol and back flushing the membrane. Repeat as necessary until filtration is complete (the filtrate is clear and the flow rate is constant). With some samples the flow rate through the membrane may become very slow necessitating a back flush before the contents have reached the 3 mL mark.
- Filter down to about the 1 mL mark and then slowly filter the contents until the liquid is just removed from above the membrane; do not allow the membrane to dry out.
- After enrichment of the disseminated cancer cells, the cells are deposited on a slide by removing the membrane from the apparatus, placing the filter cell side up on a sponge minimally saturated with 60% ethanol. A microscope slide is pressed on the sponge such that the membrane is 'sandwiched' between glass microscope slide and sponge resulting in a pressure-transfer of the cells from the membrane to the slide. Alternatively the cells on the filter could also be re-suspended by a centrifugation step. It should be noted that the cells that passed through the filter could also be used.
- The membrane is carefully peeled back so as not to disturb the transferred cell button on the microscope slide.
- The slide is immersed in fixative for later biological analysis, such as immunostaining analysis with an antibody of interest.

### 4. Alternative Enrichment Method

The following procedure describes the enrichment method for culturing and expansion of recovered cells. In this alternative enrichment method, the 40% ethanol solution is replaced by a isotonic buffered solution.
- The blood is transferred from the collection tube to a suitable centrifuge tube.
- The blood collection tube may be washed with a small amount of phosphate-buffered saline (PBS), and added to the centrifugation tube.
- Slowly inject into the bottom the centrifugation tube 3.0 mL of Ficoll-Paque gradient centrifugation media at room temperature using the 5 mL syringe with the 12 cm tip.
- The blood samples are centrifuged at a speed of 400 g for 30 minutes, using a partial or no brake at the end of the run. Batch size should be determined by the total batch processing time of 30 minutes excluding centrifugation time. It is estimated that the maximum size of a batch should be from 4 to 6 samples.
- The mononuclear cell fraction (or buffy coat) is aspirated from the centrifuge tube by immersing the tip of a 5-mL syringe fit with the 10 cm silicon-tubing tip attachment below the level of the buffy coat. Aspirate in a steady manner until a small amount of serum is aspirated. The tip should be lowered slightly and aspiration should continue until once again a small amount of serum is aspirated.
- The aspirated buffy coat is added directly onto the membrane, pre-primed with a solution that maintains the integrity and viability of the cell. This solution (called Culture Buffer) may be an isotonic buffered solution containing 10% serum by volume. There may be about 10 mL of this Culture Buffer remaining in the top chamber of the apparatus prior addition of the mononuclear cell fraction. Flush the syringe out by aspirating some of the fluid back into the syringe and back out again.
- Filter the contents down to approximately 3 mL remaining in the top chamber. Wash the sample by addition of 10 mL of Culture Buffer and back flushing the membrane. Repeat as necessary until filtration is complete (the filtrate is clear and the flow rate is constant). With some samples the flow rate through the membrane may become very slow necessitating a back flush before the contents have reached the 3 mL mark.
- At this point, the enriched fraction may be used for cell culturing purposes by at least two alternative methods:

### Method 1:

- After the enriched fraction has been filtered down to about 3 mL mark, the contents within the filtration chamber are re-suspended.
- The re-suspended fraction is then aspirated and placed in a receptacle suitable for cell culturing.

### Method 2

- After the enriched fraction has been filtered down to about 3 mL mark, slowly filter off the remaining liquid in the filtration chamber until the liquid is just removed from above the membrane, do not allow the membrane to dry out.
- The membrane itself is then removed from the filtration apparatus and placed directly into the receptacle for cell culturing containing cell culture media.

### Results

### Seeding of blood cells with exogenous tumor cells

In this experiment, blinded samples were seeded with 4 to 120 cells. Analysis by immunohistochemial detection showed that over 80% of seeded cells in each sample were recovered. See figure 3.

### 5. Appendices

### Appendix A: Detailed Operation Instructions for the Seeded Enrichment Example

1. Attach a 10cm and 12cm silicon tubes to two 5 mL syringes.
2. The blood is transferred from the collection tube to a suitable centrifuge tube.
3. The blood collection tube may be washed with a small amount of phosphate-buffered saline (PBS) < 1mL, and added to the centrifugation tube.
4. Fill the syringe with 3.0 mL of Ficoll-Paque gradient centrifugation media at room temperature. Place tip of 12cm silicon tube at the bottom of centrifugation tube. Slowly inject the 3.0 mL of Ficoll-Pague into the bottom of the tube.
5. The blood samples are centrifuged at a speed of 400 g for 30 minutes, using a partial or no brake at the end of the run (the centrifuge has horizontal swing-out buckets). Batch size should be determined by the total batch processing time of 30 minutes excluding centrifugation time. It is estimated the maximum size of a batch depending on the speed of the operator should be from 4 to 6 samples every 30 minutes.
6. Place a new membrane into the apparatus.
   (see Figure 4).
   Prime membrane to remove air from under membrane:
   i. Filling top with 10 mL of 40% ethanol
   ii. Aspirate **(F)** approximately 5 mL
   iii. Backflush **(BK)**
   iv. Aspirate (F) approximately 2 mL
   v. Backflush **(BK)**
   vi. Aspirate **(F)** approximately 1 mL
   vii. Top up to the 10 mL mark with 40% ethanol
   There should be no indication of air leaking into the system.
   Note: **(F)** and **(BK)** refer to instrument controls.
7. The mononuclear cell fraction (or buffy coat) is aspirated from the centrifuge tube by immersing the tip of a 5-mL syringe fitted with the 10cm silicon-tubing tip attachment below the level of the buffy coat, and aspirating in a steady manner until a very small amount of serum is aspirated. The tip should be lowered slightly and aspiration should continue until once again a small amount of serum is aspirated. An alternative to holding the tube by hand would be to place it in a stand.
   The aspirated buffy coat is added directly onto the membrane with 10 mL 40% ethanol. Flush the syringe out by aspirating some of the fluid back into and back out of the syringe.
8. Filter **(F)** the contents down to approximately 3 mL remaining in the top chamber. Wash the sample by addition of 10 mL of 40% ethanol and back flushing **(BK)** the membrane. Repeat as necessary until filtration is complete (the filtrate is clear and the flow rate is constant). With some samples the flow rate through the membrane may become very slow necessitating a back flush before the contents have reached the 3 mL mark.
9. Filter down to about the 1 mL mark and then slowly filter (S) the contents until the liquid is just removed from above the membrane; do not allow the membrane to dry out.
10. After enrichment of the disseminated cancer cells, the cells are deposited on a slide by removing the membrane from the apparatus. A microscope slide is pressed on the sponge such that the membrane is 'sandwiched' between glass microscope slide and sponge resulting in a pressure-transfer of the cells from the membrane to the slide.
   Remove the clamp, and remove the top of the filtration apparatus by lifting straight up. Remove the membrane using a fine pair of tweezers, being careful not to touch the area at the center that contains the cells.
   In some cases the membrane will stick to the top of the membrane apparatus, in which case use the tweezers to gently pull the membrane down and away from the top. Extra care is required not to pull the membrane across the top as the cell layer could be smeared by contact with the top piece.
   Place the membrane cell side up on a sponge dampened with 60% ethanol and preloaded into the provided jig.
   Align the membrane so that the membrane is between the 4 posts and butting up to the 2 short posts. The long axis of the membrane will be across the slide.
   Place a slide over the membrane as shown in the picture, the label side should face down.
   Gently press down on the microscope slide over the center of the sponge for about 5 - 8 seconds. Release the pressure (see Figure 5).
   Lift the slide off the sponge (the membrane will adhere to the slide). Turn the slide label side up. Carefully peel back the membrane so as not to disturb the transferred cell button on the microscope slide.
11. The slide is immersed in fixative for later immunostaining analysis with an antibody of interest (Using 95% ethanol as the fixative is suggested).
12. Press the **(F)** control for a few seconds to remove any residue filtrate from the bottom of the membrane support.

### Appendix B - Instrument controls and connections

The waste bottle vacuum pump should be turned on a few minutes before the instrument is needed to give time to purge the air from the waste bottle.

Then the pump is turned off before cleaning to allow the waste bottle to reach atmospheric pressure.
The instrument has a button **(F)** for momentary switch, to be pushed to aspirate filtrate.

The instrument further has a button **(BK)** for momentary switch, to be pushed to back flush. To prevent air getting into the system this switch should only be pulsed briefly for less than a second. Only back flush when there is liquid above the membrane and after the **(F)-button** has been used for several seconds.

The instrument further has a button **(S)** for momentary switch, used to slowly remove filtrate from the system.

## Claims

1. A method of separating multiple biological objects in a solution, wherein the biological objects are composed of at least a lower viscoelastic biological object type and a higher viscoelastic biological object type, and the lower viscoelastic biological objects have lower viscoelastic properties than the higher viscoelastic biological objects, comprising:
- a filtration step of the solution wherein the membrane is porous and the diameter of the pores is less than the diameter of the lower viscoelastic biological objects and also less than the diameter of a portion of the higher viscoelastic biological objects, and allowing the higher viscoelastic biological objects to pass through the membrane while retaining the lower viscoelastic biological objects above the membrane, and
- a recovery step wherein the separated lower viscoelastic biological objects are recovered above or onto the membrane and/or the separated higher viscoelastic biological objects are recovered in the filtrate.

2. The method according to claim 1, wherein the multiple biological objects are at least two cell types.

3. The method according to claim 2, wherein the cell types which are recovered are viable cells.

4. The method according to anyone of claims 1 to 3, wherein during the filtration step a controlled force is applied, which is kept lower than the predetermined force needed to force the lower viscoelastic biological objects to pass through the membrane, and which is higher than or equal to the predetermined force needed to force the higher viscoelastic biological objects to pass through the holes.

5. The method according to anyone of claims 2 to 4, wherein the lower viscoelastic cells are tumor cells.

6. The method according to claim 5, wherein during the filtration step a controlled force is applied which is comprised between 20 and 190 kPascals, advantageously between 45 and 55 kPascals, and the average diameter of the pores is comprised between 3 µm and 15 µm, advantageously between 6 and 9 µm, thus allowing to recover the tumor cells above the membrane.

7. The method according to anyone of claims 2 to 6, wherein the solution containing the cell types is a mononuclear cell fraction which results from a centrifugation step of a blood sample.

8. The method according to anyone of claims 2 to 4, wherein one of the cell types is a foetal cell type.

9. The method according to claim 8, wherein the foetal cells are foetal cells present in the maternal blood.

10. An *In vitro* prenatal diagnosis comprising the method according to claim 8 or 9.
